## Europäisches Patentamt
## European Patent Office
## Office européen des brevets

(11) Publication number: **0 018 156**
**B1**

(12) **EUROPEAN PATENT SPECIFICATION**

(45) Date of publication of patent specification: **14.05.86**

(51) Int. Cl.⁴: **G 11 B 19/24**

(21) Application number: **80301119.6**

(22) Date of filing: **09.04.80**

(54) **Recording and replay apparatus employing rotary media.**

(30) Priority: **17.04.79 GB 7913220**

(43) Date of publication of application:
**29.10.80 Bulletin 80/22**

(45) Publication of the grant of the patent:
**14.05.86 Bulletin 86/20**

(84) Designated Contracting States:
**BE DE FR GB IT NL**

(56) References cited:
**EP-A-0 011 493**
**EP-A-0 011 495**
**FR-A-2 169 925**
**GB-A-1 550 915**
**US-A-3 826 695**
**US-A-4 079 942**

**PATENTS ABSTRACTS OF JAPAN, vol. 2, no.
104, 26th August 1978, page 5392E78**

(73) Proprietor: **BURROUGHS CORPORATION (a
Michigan corporation)
Burroughs Place
Detroit, Michigan 48232 (US)**

(72) Inventor: **Freeman, Ian Blair
Park House 29 Rothes Park
Leslie, Fife Scotland (GB)**
Inventor: **Rooney, John O'Donnell
29 Drum Close
Stenton Glenrothes, Fife Scotland (GB)**

(74) Representative: **Kirby, Harold Douglas Benson
et al
G.F. Redfern & Company Marlborough Lodge
14 Farncombe Road
Worthing West Sussex BN11 2BT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a disc drive for the storage of informational data in a plurality of concentric data storage tracks on a rotary disc, said disc drive including a positioner for positioning a transducer adjacent to a selected track. Discs having concentric tracks are used for the storage of data in computer systems.

In order to increase the density of data storage on the disc it has been proposed to provide a rotation control servo for rotating said disc with an angular velocity in inverse proportion to the radius of the selected track in linear response to an angular velocity control signal.

JP—A—5 369 015 discloses a system in which the track position of the transducer is monitored by a head position monitor, and the rotational speed of the disc is changed according to the track position so that the tracks of the outer circumferential part of the disc have the same relative peripheral speed relative to the transducer as the inner circumferential tracks. Thus even recording of data is accomplished in each track, thereby improving recording density.

US—A—3 826 965 discloses a dictation system in which data is spirally recorded on a magnetic disc. A linear potentiometer is fixedly mounted along a radius of the disc and includes a movable wiper connected for movement with the transducer. The potentiometer is connected in the feedback loop of a high gain amplifier function generator which produces an output voltage that is hyperbolic with respect to the position of the wiper along the length of the linear potentiometer. This hyperbolic output voltage is applied to a motor for providing substantially constant tangential velocity of the portion of the disc adjacent to the transducer.

An attempt was made to use a system of the general kind shown in US—A—3 826 965 to improve recording density on discs as used in computer systems. However it became clear that a system in which a signal defining the radial position of the transducer is derived from the actual position of the transducer, and used to vary the speed of rotation of the disc, is not satisfactory since with such a system it is impossible for the disc to be rotating at the required velocity by the time that the transducer reaches the selected track. Any servo system used for controlling the speed of rotation of the disc cannot produce a stable speed of rotation more quickly than the speed at which its input varies. Thus if the input signal is derived from a potentiometer controlled by movement of the transducer, as in US—A—3 826 965, the servo for controlling the angular velocity of the disc cannot attain its final value of disc speed until after the transducer has arrived at the selected track. Any such system would be unacceptable in data storage for a computer.

In accordance with the present invention each of said plurality of tracks is sequentially numbered with a track address having predetermined increment for predetermined decrement in radius from zero for the track with greatest radius (B) to a maximum number for the track with least radius (A). The disc drive comprises a positioner coupled to receive a binary number representative of the track address of a selected track and operable in response thereto to position the transducer adjacently to the selected track, and a digital-to-analog convertor coupled to receive said same binary number simultaneously with the receipt thereof by said positioner and operable to provide an output linearly representative of the magnitude thereof. The drive also includes a summing junction and a voltage source, said summing junction being coupled to receive a predetermined voltage from said voltage source and to receive said output of said digital-to-analog convertor and being operable to provide an output representative of the sum thereof. The output of the summing junction is coupled as the angular velocity control signal to said rotation control servo, where said predetermined voltage is representative of the required angular velocity (W) of said disc at said track of greatest radius (B) and the output of said digital-to-analog convertor is scaled so that the sum of its output for said maximum number and said predetermined voltage is representative of the required angular velocity (W) of said disc at said track of least radius (A) to provide a linear approximation (Y) to said inverse proportionality.

One embodiment of the invention will now be described with reference to the accompanying diagrammatic drawings, in which:

Figure 1 shows this embodiment, and

Figure 2 is a graph depicting the relationship between the angular velocity of the disc and the radius of the track.

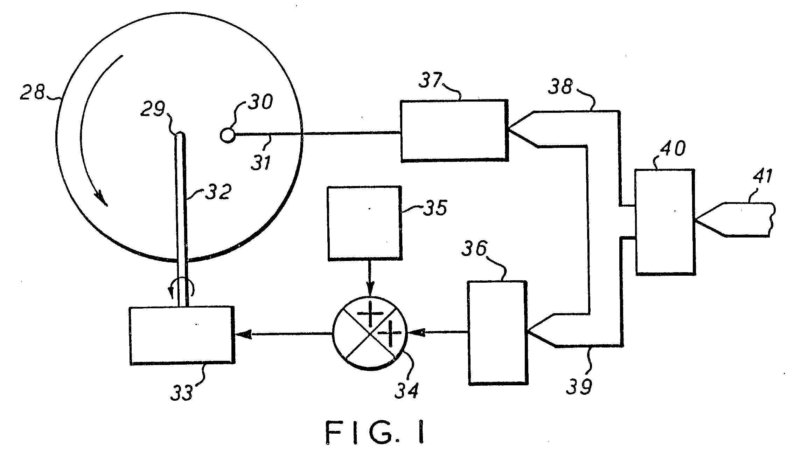

In the embodiment illustrated in Figure 1 a magnetic read/write head 30 is moved and positioned, radially on a flexible magnetic disc 28, by means of a head positioner 37 acting on the head 30 via the head mechanical coupling 31. The disc 28 is caused to rotate about its centre 29 by a rotational speed control servo 33 acting on the disc 28 via the rotational mechanical coupling 32.

A controller 40 is provided which is responsive to commands, from an outside source, such as a host computer system, down the host connector 41.

On receipt of a command on the host connector 41 the controller 40 generates, as its output, a signal indicative of the "track address", i.e. the number of the concentric data storage track, on the disc 28 on which it is required to place the head 30 in order to comply with the external command.

The tracks are numbered, sequentially by unit increments, from the data storage track of greatest radius, which is given the number zero, to the data storage track of least radius on the disc 28, which is given the number which is one less than the total number of data storage tracks per side of the disc 28. The concentric data storage tracks are equally spaced in a radial direction.

The track address, so formulated, is given as an output from the controller 40 in the form of a binary number simultaneously carried in parallel on a plurality of lines.

The output of the controller 40 is firstly coupled to the input of the head positioner 37. The head positioner 37 responds to the track address by causing the head 30 to be placed over the data storage track referred to by the track address.

The output of the controller 40 is secondly and simultaneously coupled to the input of a digital-to-analog convertor 36. The output of the digital-to-analog convertor 36 is a linear voltage representation of the binary number which is the track address.

The output of the digital-to-analog convertor 36 is added to a fixed voltage, supplied by a voltage source 35 by means of a voltage summing junction 34. The output of the voltage summing junction 34 is coupled as the controlling input, to the linearly responsive rotational speed control servo 3.

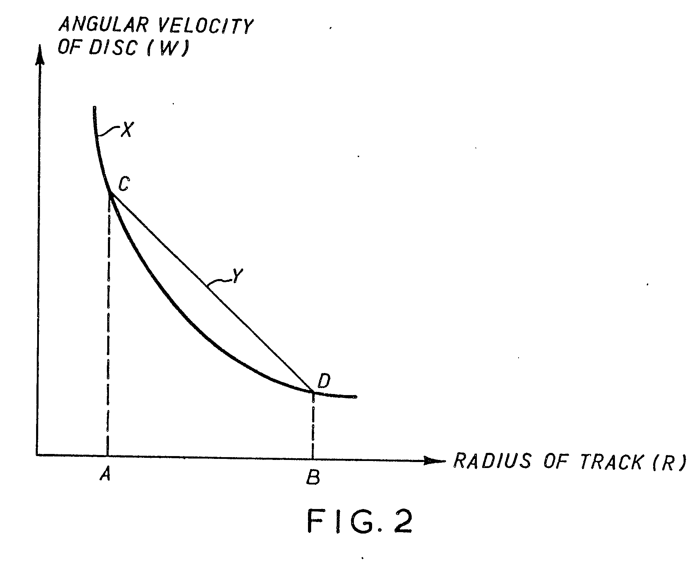

With the output of the voltage source 35 set to represent the required angular velocity of the disc 28 with the head 30 located over the outermost track (the track with the greatest radius on the disc), and the output of the digital-to-analog convertor 36 suitably scaled so that the sum of the voltage from the voltage source 35 and the digital-to-analog convertor 36, with the highest track address applied to its input, represents the required angular velocity of the disc with the head located over the data storage track of least radius, an apparatus is obtained which achieves a relationship between the radius of the head R on the disc 28 and the rotational, angular velocity W of the disc 28 corresponding to the straight line approximation Y given in Figure 2.

In Figure 2 the curve X shows the precise relationship required between disc angular velocity W and the radius of the track accessed by the head R. The straight line segment Y shows the approximation to the curve X which is employed by the preferred embodiment.

The point A represents the smallest radius on the disc to which data is to be recorded. The point B represents the greatest radius on the disc to which data is to be recorded. The points C and D represent the exact values of disc angular velocities required at these radii. They are the intercepts on the curve X of the radial values. The curve X has the equation: R × W = Linear, velocity of disc beneath head (V) where W is best expressed in radians per second. R may be in any linear distance units. V is the same units/seconds as R.

For the operation of the system shown in Figure 1, V is held approximately constant.

With the respect to the preferred embodiment it will be apparent to those skilled in the art that, with small modification, the rotational speed control servo may be made in the form of a stepping motor, driven at varying frequencies, and coupled to the disc.

Again, with respect to the preferred embodiment, it will be apparent to those skilled in the art, that signals recorded on the disc at a fixed repetition rate, may be compared with an external source of signals of the correct rate so that, on replay of the signals, recorded on the disc, the difference between the replay rate and the correct rate in frequency, phase, or both, may be used as an independent correction signal for the rotational speed control servo.

## Claims

1. A disc drive for the storage of informational data in a plurality of concentric data storage tracks on a rotary disc (28), said disc drive including a positioner (37) for positioning a transducer (30) adjacent to a selected track and a rotation control servo (33) for rotating said disc (28) with an angular velocity (W) in inverse proportion to the radius of the selected track in linear response to an angular velocity control signal, said disc drive being characterized by each of said plurality of tracks being sequentially numbered with a track address having predetermined increment for predetermined decrement in radius from zero for the track with greatest radius (B) to a maximum number for the track with least radius (A), by comprising a positioner (37) coupled to receive a binary number (on 38) representative of the track address of a selected track and operable in response thereto to position said transducer (30) adjacently to the selected track, by comprising a digital-to-analog convertor (36) coupled to receive said same binary number (on 39) simultaneously with the receipt thereof by said positioner (37) and operable to provide an output linearly representative of the magnitude thereof, by comprising a summing junction (34) and a voltage source (35), said summing junction 34 being coupled to receive a predetermined voltage from said voltage source (35) and to receive said output of said digital-to-analog convertor (34) and being operable to provide an output representative of the sum thereof, and by said output of said summing junction (34) being coupled as said angular velocity control signal to said rotation control servo (33), where said predetermined voltage is representative of the required angular velocity (W) of said disc (28) at said track of greatest radius (B) and the output of said digital-to-analog convertor (34) is scaled so that the sum of its output for said maximum number and said predetermined voltage is representative of the required angular velocity (W) of said disc (28) at said track of least radius (A) to provide a linear approximation (Y) to said inverse proportionality.

2. A disc drive according to Claim 1 characterised by said disc being a magnetic disc and by said transducer being a magnetic head.

## Patentansprüche

1. Scheibenantrieb für eine Einrichtung zum Speichern von Informationsdaten in mehreren konzentrischen Datenspeicherspuren auf einer rotierenden Scheibe (28), mit einer Positioniervorrichtung (37) zum Positionieren eines Übertragers (30) in der Nähe einer ausgewählten Spur und einer Rotations-Servoregelungseinrichtung (33) zum Drehen der Scheibe (28) mit einer Winkelgeschwindigkeit (W), die umgekehrt proportional zum Radius der ausgewählten Spur in linearer Abhängigkeit von einem Winkelgeschwindigkeits-Steuersignal ist, dadurch gekennzeichnet, daß jede der mehreren Spuren sequentiell mit einer Spurenadresse beziffert ist, die ein vorbestimmtes Inkrement auf ein vorbestimmtes Dekrement bezüglich des Radius beginnend bei NULL für die Spur mit dem größten Radius (B) bis zu einer maximalen Ziffer für die Spur mit dem kleinsten Radius (A) aufweist, daß eine Positioniervorrichtung (37) vorgesehen ist, die eine binäre Ziffer (auf 38) empfängt, die der Spurenadresse einer ausgewählten Spur entspricht und die darauf den Wandler (30) in der Nähe der ausgewählten Spur positioniert, daß ein Digital-Analog-Wandler (36) vorgesehen ist, der dieselbe Binärziffer (auf 39) gleichzeitig mit deren Empfang durch die Positioniervorrichtung (37) empfängt und der ein Ausgangssignal abgibt, das linear der Größe der Binärziffer entspricht, daß eine Summiervorrichtung (34) und eine Spannungsquelle (35) vorgesehen sind, wobei die Summiervorrichtung (34) eine vorbestimmte Spannung von der Spannungsquelle (35) und das Ausgangssignal des Digital-Analog-Wandlers (34) empfängt und ein Ausgangssignal abgibt, das der Summe beider Signale entspricht, und daß das Ausgangssignal der Summiervorrichtung (34) als Winkelgeschwindigkeits-Steuersignal an die Rotations-Servoregelungseinrichtung (33) abgegeben wird, wobei die vorbestimmte Spannung der erforderlichen Winkelgeschwindigkeit (W) der Scheibe (28) bei der Spur mit dem größten Radius (B) entspricht und das Ausgangssignal des Digital-Analog-Wandlers (34) so bemessen ist, daß die Summe seines Ausgangssignals für die Maximalziffer und der vorbestimmten Spannung der gewünschten Winkelgeschwindigkeit (W) der Scheibe (28) an der Spur mit dem größten Radius (A) entspricht, um eine lineare Näherung (Y) zu der umgekehrten Proportionalität vorzusehen.

2. Scheibenantrieb nach Anspruch 1, dadurch gekennzeichnet, daß die Scheibe aus einer magnetischen Scheibe und der Wandler aus einem Magnetkopf besteht.

**Revendications**

1. Moyen d'entraînement de disque pour l'enregistrement de données d'information sur un ensemble de pistes de stockage de données, concentriques sur un disque rotatif (28), ce moyen d'entraînement comprenant un dispositif de positionnement (37) pour positionner un transducteur (30) au voisinage d'une piste choisie et un dispositif d'asservissement de commande de rotation (33) pour entraîner en rotation le disque (28) à une vitesse angulaire (W) inversement proportionnelle au rayon de la piste choisie, suivant une réponse linéaire à un signal de commande de vitesse angulaire, le moyen d'entraînement de disque étant caractérisé en ce que chacune des différentes pistes· est numérotée séquentiellement par une adresse de piste ayant un incrément prédéterminé pour un décrément prédéterminé du rayon en partant de zéro pour la piste dans le cas du rayon le plus grand (B) jusqu'à un nombre maximum pour la piste correspondant au rayon le plus petit (A), comportant un dispositif de positionnement (37) couplé de façon à recevoir un nombre binaire (sur 38) représentant l'adresse de piste d'une piste choisie et travaillant en réponse à ce signal pour positionner le transducteur (30) au voisinage de la piste choisie, avec un convertisseur numérique/analogique (36) recevant le même nombre binaire (sur 39) simultanément à la réception par le dispositif de positionnement (37) et fonctionnant pour fournir un signal de sortie qui est une fonction linéaire de l'amplitude, avec une jonction d'addition (34) et une source de tension (35), la jonction d'addition (34) étant branchée de façon à recevoir une tension prédéterminée de la source de tension (35) et à recevoir le signal de sortie du convertisseur numérique/analogique (34), en fournissant un signal de sortie représentant de la somme et en ce que le signal de sortie de cette jonction d'addition (34) est couplé comme signal de commande de vitesse angulaire au dispositif d'asservissement de commande de rotation (33), la tension prédéterminée représentant la vitesse angulaire nécessaire (W) pour le disque (28) pour la piste de plus grand rayon (B) et le signal de sortie du convertisseur numérique/analogique (34) étant mis à l'échelle de façon que la somme de son signal de sortie pour le nombre maximum et la tension prédéterminée soit représentative de la vitesse angulaire nécessaire (W) pour le disque (28) pour la piste de plus petit rayon (A) de façon à obtenir une approximation linéaire (Y) de cette proportionalité inverse.

2. Moyen d'entraînement du disque selon la revendication 1, caractérisé en ce que le disque est un disque magnétique et le transducteur est une tête magnétique.

FIG. 1

FIG. 2